# EUROPÄISCHE PATENTANMELDUNG

(11) **EP 1 865 242 A2**
(43) Veröffentlichungstag der Anmeldung: **12.12.2007**
(21) Anmeldenummer: 07109533.5
(22) Anmeldetag: 04.06.2007
(51) Int. Cl.: F16L 15/08

(54) **Mehrkomponenten Verbindungsstruktur**

(30) Priorität: 07.06.2006 DE 102006026430
(71) Anmelder: Gealan Formteile GmbH, 95145 Oberkotzau (DE)
(72) Erfinder: Braun, Thomas, 95234 Sparneck (DE); Laubmann, Gerhard, 95119 Naila (DE)
(74) Vertreter: Fleuchaus, Michael A.

(57) **Zusammenfassung**

Die vorliegende Erfindung betrifft eine Verbindungsstruktur zur Kraftbegrenzung beim Verbinden und/oder Lösen von medienführenden Bauteilen, mit wenigstens zwei Abschnitten zweier medienführender Bauteile (1) und wenigstens einem, im Wesentlichen die kraft- und/oder formschlüssige Verbindung bewirkenden Kopplungselement (2). Die Verbindungsstruktur ist dadurch gekennzeichnet, dass die medienführenden Bauteile im Bereich der Verbindungsstruktur wenigstens ein Paar korrespondierende Verbindungselemente (11, 21, 41, 42) aufweisen, deren Zusammenwirken zur Bildung einer im Wesentlichen mediendichten Verbindung zwischen den Bauteilen (1) durch eine kraft- und/oder formschlüssige Verbindung mit dem Kopplungselement (2) bewirkt wird, wobei die kraft- und/oder formschlüssige Verbindung zwischen den Bauteilen (1) und dem Kopplungselement (2) in Bezug auf die zu übertragende Kraft in wenigstens einer axialen und/oder radialen Richtung begrenzt ist.

## Beschreibung

Die vorliegende Erfindung betrifft eine Verbindungsstruktur zur Kraftbegrenzung insbesondere beim Verbinden und/oder Lösen von medienführenden Bauteilen.

Verbindungsstrukturen zum insbesondere Verbinden oder Lösen von medienführenden Bauteilen sind im Stand der Technik bekannt. Nachteilig bei solchen Verbindungsstrukturen ist, insbesondere wenn sie nicht aus Metall sondern aus Kunststoff gefertigt sind, dass solche Bauteile in Bezug auf die mechanischen Kräfte, welche beispielsweise bei der Montage oder Demontage über oder auf solche Bauteile übertragen werden, relativ leicht beschädigt oder zerstört werden können.

Dies kann insbesondere dann auftreten, wenn medienführende Bauteile derart miteinander verbunden werden, dass die Verbindungsstelle für das hierin geführte Medium dicht verbunden werden soll. Zwar kann im optimalen Fall, insbesondere bei optimaler Ausrichtung und optimal gewähltem Abstand unmittelbar eine dichte Verbindung bereitgestellt werden, jedoch zeigt die Erfahrung, dass solche idealen Bedingungen insbesondere auf Baustellen nicht immer gegeben sind. Dies führt dazu, dass insbesondere bei nicht idealer Ausrichtung der zu verbindenden Strukturen unter anderem Undichtigkeit auftreten kann. In der Praxis wird dann teilweise versucht, diese Undichtigkeit dadurch zu beheben, dass die zu verbindenden Teile mit einem höheren Kraftaufwand verbunden werden, was jedoch bei Kunststoffbauteilen die Folge haben kann, dass die Bauteile entweder sofort zerstört oder aber derart geschädigt werden, dass sie insbesondere bei langzeitigen Gebrauch Risse und Ermüdungsdefekte aufzeigen, die zu Leckagen bei den verbundenen Bauteilen führen.

Aufgabe der vorliegenden Erfindung ist es u. a. eine Verbindungsstruktur bereit zu stellen, die insbesondere beim Verbinden oder Lösen von medienführenden Bauteilen eine Kraftbegrenzung bereitstellt, mit welcher vermieden wird, dass die zu verbindenden Bauteile über die durch die Materialeigenschaft bestimmte maximale Kraft hinaus belastet werden und somit eine Beschädigung der zu verbindenden Bauteilen bei der Montage oder Demontage möglichst verhindert wird.

Gelöst wird die vorstehende Aufgabe durch eine Verbindungsstruktur gemäß Anspruch 1. Bevorzugte Ausgestaltungen der erfindungsgemäßen Verbindungsstruktur sind Gegenstand der Unteransprüche.

Gemäß der vorliegenden Verbindung weist die Verbindungsstruktur zur Kraftbegrenzung insbesondere beim Verbinden und/oder Lösen von medienführenden Bauteilen wenigstens zwei Abschnitte zweier medienführender Bauelemente auf und hat wenigstens ein, im Wesentlichen die kraft- und/oder formschlüssige Verbindung zwischen den medienführenden Bauteilen bewirkendes Kopplungselement. Die Verbindungsstruktur ist dadurch gekennzeichnet, dass die medienführenden Bauteile im Bereich der Verbindungsstruktur wenigstens ein Paar korrespondierende Verbindungselemente aufweisen, deren Zusammenwirken zur Bildung einer, im Wesentlichen mediendichten Verbindung zwischen den Bauteilen durch eine kraft- und/oder formschlüssige Verbindung mit dem Kopplungselement dient. Gemäß der vorliegenden Erfindung, wird die kraft- und/oder formschlüssige Verbindung zwischen den Bauteilen und dem Kopplungselement in Bezug auf die zu übertragende Kraft in wenigstens einer axialen und/oder radialen Richtung begrenzt.

Als axiale und/oder radiale Richtung wird hierbei eine Richtung verstanden, wie sie sich beispielsweise bei dem Verbinden zweier Rohrelemente in der Art ergibt, dass sich die radiale Richtung in Umfangsrichtung im Wesentlichen quer zu der Haupterstreckungsrichtung und entsprechend sich die axiale Richtung im Wesentlichen entlang oder parallel zu der Haupterstreckungsrichtung ergibt.

Als medienführendes Bauteil wird gemäß der vorliegenden Erfindung jede Art von Bauteil verstanden, das im Wesentlichen dazu dient oder dienen kann ein Medium zwischen wenigstens zwei Punkten zu leiten und/oder zu führen. Solche Bauteile können beispielsweise Rohre, Ventile, Behälter, Kombinationen hiervon oder dergleichen sein.

Medien, welche in solchen Bauteilen geführt werden, sind beispielsweise flüssige oder gasförmige Medien, vorzugsweise wässrige Lösungen oder Gase wie sie insbesondere in der Versorgungstechnik verwendet werden.

Gemäß der vorliegenden Erfindung sind wenigstens die medienführenden Bauteile und/oder die Verbindungselemente und/oder das oder die Kopplungselement/e der Verbindungsstruktur als so genannte Mehrkomponenten-Verbindungsstrukturen ausgeführt und weisen gemäß einer weiteren besonders bevorzugten Ausführungsform wenigstens teilweise aus Kunststoff gefertigte Materialkomponenten auf.

Gemäß einer weiteren, besonders bevorzugten Ausführungsform sind die medienführenden Bauteile und/oder Verbindungselemente und/oder Kopplungselemente der Verbindungsstruktur vollständig aus Kunststoff hergestellt, wobei es insbesondere im Sinn der vorliegenden Erfindung liegt, dass unterschiedliche Kunststoffe für die einzelnen Elemente der Verbindungsstruktur verwendet werden. Diese sind vorzugsweise auf die jeweiligen Eigenschaften wie beispielsweise das Bereitstellen einer mediendichtenden Verbindung der medienführenden Bauteile bzw. für das Kopplungselement und dessen Funktion zur Übertragung einer Kraft auf die zu bildende kraft- und/oder formschlüssige Verbindung ausgewählt und evtl. optimiert.

Solche Kunststoffe werden gemäß der vorliegenden Erfindung vorzugsweise aus einer Gruppe von Kunststoffen ausgewählt, welche insbesondere duro- und thermoplastische Kunststoffe aufweist. Solche Kunststoffe können insbesondere Polyphenylensulfid, Polypropylen, Poly-1-buten, Polyvinylchlorid, Polyvinylidenchlorid, Polymethyl-metaacrylat, Polyacrylnitril, Polystyrol, Polyacetal, Polyvinylalkohol, Polyvinylacetat, Ionomere, Fluorkunststoff, Polyethylen, Polyamid, insbesondere ein teilaromatisches Polyamid, Polycarbonat, Polyester, Polyphenylenoxid, Polysulfon, Polyvinylacetal, Polyurethan, und chlorierter Polyether, Zellulosenitrat, Zelluloseacetat, Zelluloseether, Phenol-Harz, Harnstoff-Harz, Thioharnstoff-Harz, Melamin-Harz, Alkylharz, Allylharz, Silicon, Polyimid, Polybenzimidazol, Epoxidharz, Casein-Kunststoff, vernetztes Polyurthan, ungesättigtes Polyesterharz, Kombinationen hiervon und dergleichen sein.

Die medienführenden Bauteile wie sie zuvor beschrieben worden sind, sind gemäß einer weiteren besonders bevorzugten Ausführungsform Rohre oder Rohrabschnitte welche insbesondere einen rechteckigen, quadratischen, ovalen, runden oder einen ähnlichen Querschnitt aufweisen.

Die Verbindungselemente zwischen den medienführenden Bauteilen zur Bildung einer im Wesentlichen mediendichten Verbindung sind beispielsweise Schraub-, Rast-, Einhak- und Klemmverbindungen, Kombinationen hieraus und dergleichen. Gemäß einer weiteren besonders bevorzugten Ausführungsform der vorliegenden Erfindung ist die kraftübertragende Verbindung insbesondere zwischen den Kopplungselement und wenigstens einem der medienführenden Bauteile eine Rutschkupplung, welche insbesondere nur die Übertragung eines maximal beschränkten Drehmomentes auf das medienführende Bauteil ermöglicht.

Gemäß einem besonders bevorzugten Ausführungsbeispiels sind die Kunststoffe und der entsprechende Freiraum zwischen den Klinke und den Eingriffsabschnitten für eine Rutschkupplung so gewählt sind, dass diese in Wirkrichtung die Übertragung eines vorgegebenen Drehmoments ermöglichen, bei dessen Überschreitung die kraftübertragende Verbindung überrutscht und somit eine Beschädigung oder Zerstörung der mit dem entsprechenden Moment beaufschlagten Bauteile vermieden wird. Dabei kann das Überrutschen in der Art erfolgen, dass die Rutschkupplung lediglich in die nächste Eingriffsposition verschoben wird. Alternativ kann die Klinke auch bei Anwendung eines zu hohen Drehmoments beschädigt oder zerstört werden, so dass die Übertragung eines zu hohen Drehmoments vermieden wird. Bei einer derartigen Ausgestaltungsform wäre es dann jedoch notwendig, wenigstens das Kopplungselement mit den entsprechenden Klinken zu ersetzen.

Gemäß einer weiteren, besonders bevorzugten Ausführungsform ist das Kopplungselement als ein sog. Ratschensystem ausgeführt. Dabei kann die Kraftübertragung vorzugsweise nur in eine Richtung erfolgen. Bei Belastung des Kopplungselements in die entgegengesetzte Richtung gleiten die entsprechenden Übertragungsglieder des Ratschensystems übereinander hinweg. Solch ein System ist dem Grunde nach dem Stand der Technik allgemeiner Art bekannt und dient der einfachen Montage insbesondere bei geringem Platz.

Gemäß einer weiteren, besonders bevorzugten Ausführungsform in welcher das Kopplungselement als Ratschensystem ausgeführt ist, können um einerseits die Montage, aber auch die Demontage der entsprechenden Verbindungsstruktur zu bewirken, zwei Kopplungselemente vorgesehen sein, die beispielsweise hintereinander angeordnet sind und in entgegengesetzter Wirkrichtung die Übertragung eines Drehmomentes auf das entsprechende Bauteil ermöglichen.

Gemäß einer weiteren, besonders bevorzugten Ausführungsform der vorliegenden Erfindung ist das Kopplungselement als Überwurfshülse ausgestaltet, an deren Innenseite wenigstens ein Eingriffselement, vorzugsweise eine Vielzahl von Eingriffselementen vorgesehen sind, welche in entsprechend korrespondierende Ausnehmungen des weiteren medienführenden Bauteils eingreifen.

Dabei liegt es im Sinn der vorliegenden Erfindung, dass die Kopplungselemente gemäß einer weiteren bevorzugten Ausführungsform wenigstens mit einem medienführenden Bauteil fest verbunden sind und mit diesem beispielsweise einstückig ausgebildet werden. Selbstverständlich liegt es auch im Sinn der vorliegenden Erfindung, dass die entsprechenden Komponenten getrennt voneinander hergestellt und nachfolgend miteinander beispielsweise stoffschlüssig verbunden werden.

Gemäß einer weiteren, besonders bevorzugten Ausführungsform der vorliegenden Erfindung werden die Bauteile, die Verbindungselemente und/oder das wenigstens eine Kopplungselement, insbesondere mit seiner Verbindung zu wenigstens einem medienführenden Bauteil im Zweikomponenten- oder Mehrkomponenten-Spritzguss-Verfahren hergestellt. Hierdurch können insbesondere die jeweilige Materialeigenschaften auf den entsprechenden Einsatz innerhalb des Verbindungssystems optimal ausgewählt werden.

Gemäß einer weiteren, besonders bevorzugten Ausführungsform der vorliegenden Erfindung ist die zu übertragende Kraft in der Art in ihrem maximalen Wert beschränkt, dass die Gegenverzahnung der Verbindungsstruktur bei einem Überschreiten der maximalen Kraft gelöst wird, so dass auch hierdurch eine mögliche Beschädigung der Verbindungsstruktur bzw. der Bauteile verhindert wird. Dabei kann gemäß einer weiteren besonders bevorzugten Ausführungsform die maximal zu übertragende Kraft einerseits durch den verwendeten Kunststoff, andererseits aber auch, durch das Schwindungsverhältnis der sich gegenüberliegenden Kunststoffe insbesondere beim Mehrkomponenten-Spritzguss-Verfahren bestimmt werden, wodurch sowohl der Freiraum, als auch die entsprechende Gegenverzahnung in Form und Spiel bestimmt werden.

Die vorliegende Erfindung beansprucht neben der Verbindungsstruktur auch ein Spritzgießverfahren zum Herstellen solcher Verbindungsstrukturen, insbesondere von solchen Verbindungsstrukturen die als Mehrkomponentenstrukturen ausgeführt sind und vorzugsweise in einem einzigen Prozessschritt hergestellt werden, bei welchem wenigstens zwei Kunststoffe in vorzugsweise einem Spritzgießprozess verarbeitet werden.

Die Erfindung wird nachfolgend anhand zweier verschiedener Ausführungsformen erörtert, wobei darauf hingewiesen wird, dass es selbstverständlich auch im Sinn der vorliegenden Erfindung liegt, Abwandlungen von diesen Ausführungsformen vorzunehmen. Auch für den Fachmann ersichtliche Abwandlungen, welche insbesondere Kombinationen oder Ergänzungen der entsprechenden Verbindungsstrukturen umfassen, sind im Sinn in der vorliegenden Erfindung.

Dabei zeigt:
Fig. 1 eine perspektivische Ansicht eines medienführenden Bauteils mit einem Kopplungselement;
Fig. 2 das medienführende Bauteil aus Fig. 1;
Fig. 3 eine perspektivische Ansicht des Kopplungselements aus Fig. 1;
Fig. 4 eine plane Seitenansicht von hinten auf das Kopplungselement gemäß Fig. 3:
Fig. 5 eine perspektivische Darstellung eines weiteren Ausführungsbeispiels einer erfindungsgemäßen Verbindungsstruktur;
Fig. 6 eine Schnittdarstellung der Verbindungsstruktur gemäß Fig. 5;
Fig. 7 eine Detaildarstellung der Verbindungsstruktur aus Fig. 6.

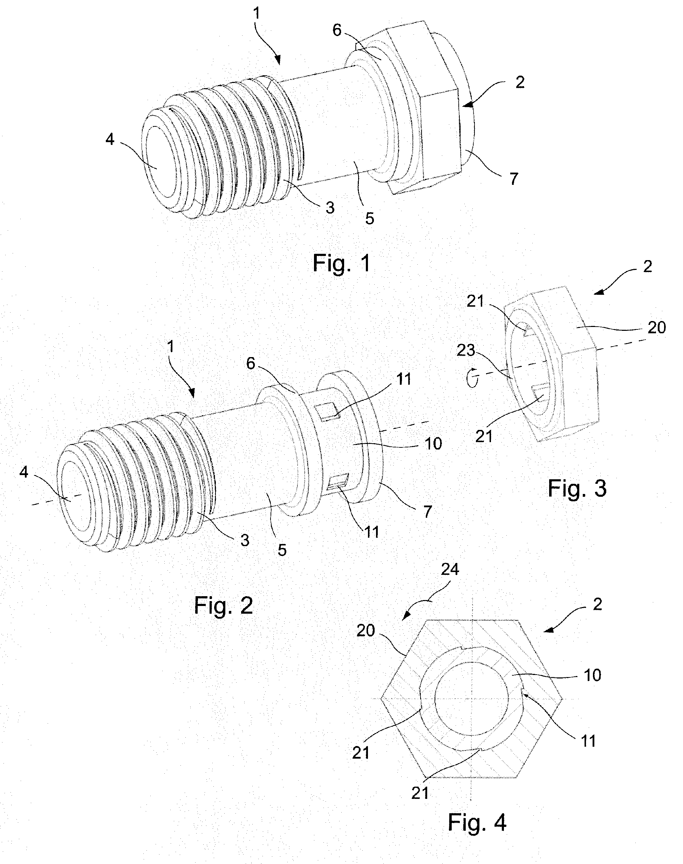

Fig. 1 ist eine perspektivische Seitenansicht eines Teils der erfindungsgemäßen Verbindungsstruktur zur Kraftbegrenzung mit einem medienführenden Bauteil 1 und einem Kopplungselement 2. Das Gegenstück, in welches das hier abgebildete medienführende Bauteil eingeschraubt werden könnte, ist nicht dargestellt. Dies kann entsprechend der vorliegenden Erfindung jede Art eines Bauteils sein, dass insbesondere ein entsprechendes Innengewinde aufweist und vorzugsweise eine Fluidverbindung für das Medium bereitstellt. Das medienführende Bauteil ist ähnlich wie eine Schraube mit Außengewinde 3 aufgebaut und weist eine Durchgangsöffnung 4 auf. Im Anschluss an das Gewinde erstreckt sich ein Übergangsbereich 5, der an seinem rechten Ende zwei radial umlaufende Flanschabschnitte 6 und 7 aufweist, zwischen welchen das Kopplungselement 2 drehbeweglich aufgenommen ist.

Fig. 2 ist eine perspektivische Ansicht des medienführenden Bauteils 1, von welchem das Kopplungselement 2 entfernt wurde. Dabei wird der Gleitweg 10 für das Kopplungselement 2 sichtbar, der in seinem Umfang Ausnehmungen 11 aufweist, in welche die in Fig. 3 und 4 dargestellten Klinken 21 eingreifen können. Gemäß der hier dargestellten Ausführungsform sind die Ausnehmungen 11 und die entsprechenden Klinken 21 derart ausgebildet, dass sie im Sinne eines Ratschenmechanismus die Übertragung einer Kraft nur in eine Richtung ermöglichen, wie dies mit dem Pfeil 12 in Fig. 3 (gegen den Uhrzeigersinn) dargestellt ist.

Fig. 3 zeigt das Kopplungselement ohne ein entsprechendes medienführendes Bauteil, wobei zusammen mit der Seitenansicht aus Fig. 4 die Wirkrichtung der Klinken 21 deutlich wird. Fig. 4 ist eine plane Seitenansicht des Kopplungselements der Fig. 3 von hinten, wobei neben dem Kopplungselement 2 und dem medienführenden Bauteil 1 in der Schnittdarstellung auch deren grundsätzliche Ausgestaltung zu erkennen ist. Man erkennt das Kopplungselement 2 mit der sechskantigen Außenkontur 20, das mit den Klinken 21 in Eingriff zu den Ausnehmungen 11 des medienführenden Bauteils 1 im Verbindungsbereich steht. Entsprechend dem Pfeil 24 wird durch Drehung des Kopplungselements 2 im Uhrzeigersinn keine Kraft übertragen, sondern die Klinken rutschen entsprechend einer Ratschenverbindung aus den jeweiligen Eingriffselementen heraus. Wird das Kopplungselement 2 entsprechend weiter gedreht, schnappen die Eingriffselemente in die nachfolgende Ausnehmung 11 wieder ein. Gemäß der Darstellung in Figur 4 ist zu berücksichtigen, dass die Klinken 21 entsprechend ihrem Aufbau die notwendige Bewegungsfreiheit besitzen, um insbesondere einen entsprechenden Versatz bzw. eine Verschiebung oder Kompression in radialer Richtung bereit zu stellen, um somit aus der Klinkenverzahnung gegen den Uhrzeigersinn heraus zu gleiten. Dies ist jedoch der Darstellung in Figur 4 nicht unmittelbar zu entnehmen.

Dreht man den Sechskant des Kopplungselements gegen den Uhrzeigersinn wird eine Kraft auf das medienführende Bauteil 1 übertragen, wobei diese dadurch begrenzt ist, das durch die Materialauswahl des Kopplungselements 2, insbesondere der Klinken 21 nur eine maximale vorbestimmte Kraft übertragen werden kann, bevor beispielsweise die Klinken 21 abgeschert werden und damit eine weitere Kraftübertragung auf das medienführende Bauteil unterbunden wird.

Solche Bauteile können beispielsweise in Zweikomponenten-Spritzguss hergestellt werden, so dass insbesondere das medienführende Bauteil aus einem anderen Kunststoff hergestellt ist, als der Sechskant und die Klinken 21 des Kopplungselementes 2. Vorzugsweise wird durch einen unterschiedlichen Schwund der verschiedenen Kunststoffe beim Abkühlen der notwendige Freiraum zwischen den einzelnen Bauteilen geschaffen, um sowohl eine Drehbeweglichkeit, als auch eine Kraftbegrenzung bezüglich des zu übertragenden Drehmomentes bereit zu stellen.

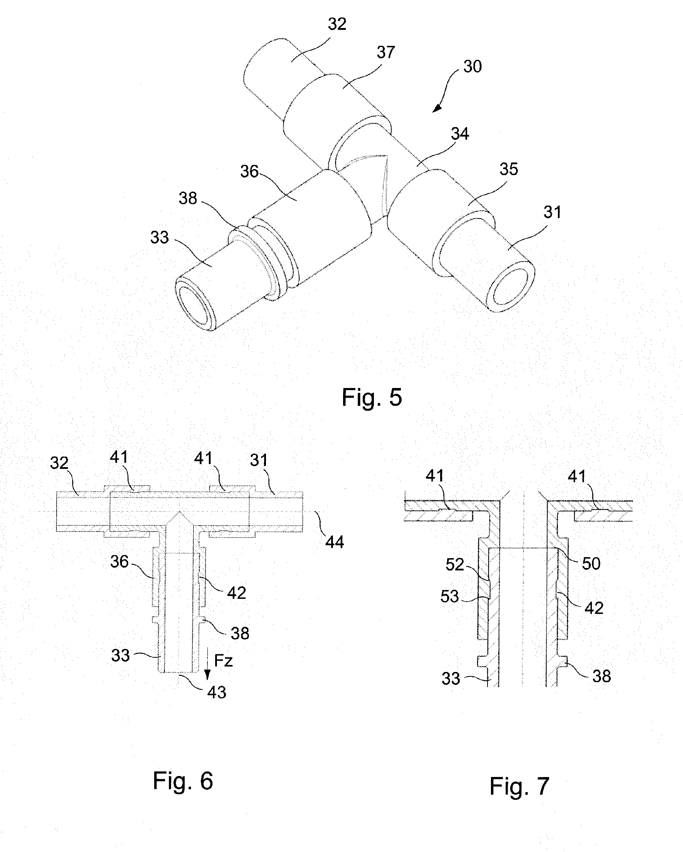

Fig. 5 zeigt ein weiteres bevorzugtes Ausführungsbeispiel der erfindungsgemäßen Verbindungsstruktur. Dabei sind mittels eines T-Stück drei medienführende Bauteile miteinander verbunden. Die medienführenden Bauteile 31 und 32 weisen dazu die Hülsen 35 und 37 auf, in welche die entsprechenden Abschnitte des T-Verbindungsstückes aufgenommen werden. Das medienführende Bauteil 33 weist selbst keine Hülse auf, sondern umfasst lediglich einen Anschlag bzw. einen Führungsring 38, und ist in einem Hülsenstück 36 des T-Stücks aufgenommen.

Solch eine Verbindungsstruktur kann beispielsweise in der Zweikomponenten-Spritzgusstechnik hergestellt werden und umfasst dabei insbesondere alle medienführenden Bauteile inklusiv des T-Stücks selbst.

Gemäß des hier dargestellten Ausführungsbeispiels weisen die Hülsen 35 und 37 auf der zum T-Stück zugewandten Innenseite Kopplungsvorsprünge 41 auf, die einer formschlüssigen Verbindung zwischen der Hülse und dem medienführenden Bauteil dienen. Das medienführende Bauteil 33 ist gemäß der hier dargestellten Ausführungsform in der Art trennbar mit der T-Verbindung verbunden, dass die in der Hülse 36 nach innen angeordnete Verbindungsstruktur 42 auf der hinteren Seite eine Schräge 52 (vgl. Fig. 7) aufweist, die es ermöglicht, bei einer entsprechenden Zugkraft Fz, welche auf das medienführende Bauteil 33 wirkt, dieses entsprechend frei zu geben, insbesondere bevor Schädigungen an den einzelnen Bauteilen auftreten. Hierdurch ist gewährleistet, dass eine Beschädigung des T-Stücks bei der Demontage des medienführenden Bauteils 33 vermieden wird. Im Detail ist diese Verbindung der Hülse 36 mit dem Bauteil 33 in Fig. 7 dargestellt, wobei zu erkennen ist, dass das Eingriffselement 42 auf der rückwärtigen Seite eine Schräge 52 und auf der vorderen Kante einen senkrechten Anschlag 53 aufweist. Dieser ist gemäß der hier dargestellten Ausführungsform derart angeordnet, dass sowohl der Abschluss des medienführenden Bauteils 50, als auch der entsprechende Anschlag 53 eine kraftschlüssige und formschlüssige Verbindung zwischen den Bauteilen bereitstellt.

## Patentansprüche

1. Verbindungsstruktur zur Kraftbegrenzung beim Verbinden und/oder Lösen von medienführenden Bauteilen, mit wenigstens zwei Abschnitten zweier medienführender Bauteile (1) und wenigstens einem, im Wesentlichen die kraft- und/oder formschlüssige Verbindung bewirkenden Kopplungselement (2), **dadurch gekennzeichnet, dass**
die medienführenden Bauteile im Bereich der Verbindungsstruktur wenigstens ein Paar korrespondierende Verbindungselemente (11, 21, 41, 42) aufweisen, deren Zusammenwirken zur Bildung einer im Wesentlichen mediendichten Verbindung zwischen den medienführenden Bauteilen (1) durch eine kraft- und/oder formschlüssige Verbindung mit dem Kopplungselement (2) dient, wobei die kraft- und/oder formschlüssige Verbindung zwischen den Bauteilen (1) und dem Kopplungselement (2) in Bezug auf die zu übertragende Kraft in wenigstens einer axialen und/oder radialen Richtung begrenzt ist.

2. Verbindungsstruktur gemäß Anspruch 1, **dadurch gekennzeichnet, dass**
die medienführende Bauteile (1) und/oder Verbindungselemente (11, 21, 41, 42) und/oder das Kopplungselement (2) der Verbindungsstruktur, insbesondere einer Mehrkomponentenverbindungsstruktur, wenigstens teilweise aus Kunststoff hergestellt sind.

3. Verbindungsstruktur gemäß Anspruch 2, **dadurch gekennzeichnet, dass**
der Kunststoff aus einer Gruppe von Kunststoffen ausgewählt wird, welche vorzugsweise duro- und thermoplastische Kunststoff und insbesondere Polyphenylensulfid, Polypropylen, Poly-1-buten, Polyvinylchlorid, Polyvinylidenchlorid, Polymethyl-metaacrylat, Polyacrylnitril, Polystyrol, Polyacetal, Polyvinylalkohol, Polyvinylacetat, Ionomere, Fluorkunststoff, Polyethylen, Polyamid, insbesondere ein teilaromatisches Polyamid, Polycarbonat, Polyester, Polyphenylenoxid, Polysulfon, Polyvinylacetal, Polyurethan, und chlorierter Polyether, Zellulosenitrat, Zelluloseacetat, Zelluloseether, Phenol-Harz, Harnstoff-Harz, Thioharnstoff-Harz, Melamin-Harz, Alkylharz, Allylharz, Silicon, Polyimid, Polybenzimidazol, Epoxidharz, Casein-Kunststoff, vernetztes Polyurthan, ungesättigtes Polyesterharz, Kombinationen hiervon und dergleichen umfasst.

4. gemäß einem der vorstehenden Ansprüche, **dadurch gekennzeichnet, dass**
die medienführenden Bauteile (1) Rohre oder Rohrabschnitte sind, welche insbesondere einen rechteckigen, quadratischen, ovalen, runden oder einen ähnlichen Querschnitt aufweisen.

5. Verbindungsstruktur gemäß einem der vorstehenden Ansprüche, **dadurch gekennzeichnet, dass**
die Verbindungselemente (11, 21, 41, 42) zwischen den medienführenden Bauteilen (2) Schraubverbindungen, Rastverbindungen, Einhakverbindungen, Klemmverbindungen, Kombinationen hieraus und dergleichen sind.

6. Verbindungsstruktur gemäß einem der vorstehenden Ansprüche, **dadurch gekennzeichnet, dass**
die Verbindung zwischen Kopplungselement (2) und medienführendem Bauteil (1) eine Rutschkupplung ist, welche nur die Übertragung eines maximal beschränkten Drehmomentes ermöglicht.

7. Verbindungsstruktur gemäß einem der vorstehenden Ansprüche, **dadurch gekennzeichnet, dass**
das Kopplungselement (2) ein Ratschensystem ist.

8. Verbindungsstruktur gemäß einem der vorstehenden Ansprüche, **dadurch gekennzeichnet, dass**
das Kopplungselement (2) eine Überwurfhülse ist, an deren Innenseite Eingriffselemente (21) vorgesehen sind, welche in korrespondierende Ausnehmungen (11) des wenigstens einen medienführenden Bauteils (1) eingreifen.

9. Verbindungsstruktur gemäß einem der vorstehenden Ansprüche, **dadurch gekennzeichnet, dass**
zwei Kopplungselemente (2) vorgesehen sind, deren jeweilige Wirkrichtung entgegengesetzt ausgerichtet ist.

10. Verbindungsstruktur gemäß einem der vorstehenden Ansprüche, **dadurch gekennzeichnet, dass**
das Kopplungselement (2) mit einem medienführenden Bauteil (1) fest verbunden ist und insbesondere mit diesem einstückig ausgebildet ist.

11. Verbindungsstruktur gemäß einem der vorstehenden Ansprüche, **dadurch gekennzeichnet, dass**
wenigstens die medienführende Bauteile (1) und/oder die Verbindungselemente (11, 21, 41, 42) und/oder das Kopplungselement, insbesondere mit seiner Verbindung zu wenigstens einem medienführenden Bauteil (1), im Zweikomponenten- oder Mehrkomponenten-Spritzguss-Verfahren hergestellt werden.

12. Verbindungsstruktur gemäß einem der vorstehenden Ansprüche, **dadurch gekennzeichnet, dass**
die Beweglichkeit der Verbindungselemente (11, 21, 41, 42) zum Kopplungselement (2) durch eine gerichtete Gegenverzahnung der Elemente bereitgestellt wird.

13. Verbindungsstruktur gemäß einem der vorstehenden Ansprüche, **dadurch gekennzeichnet, dass**
das maximal übertragbare Drehmoment zwischen dem Verbindungselement (11, 21, 41, 42) und dem Kopplungselement (2) durch ein axiales oder radiales Überrutschen der Gegenverzahnung begrenzt wird.

14. Verbindungsstruktur gemäß einem der vorstehenden Ansprüche, **dadurch gekennzeichnet, dass**
das maximal übertragbare Drehmoment durch das Schwindungsverhältnis der verwendeten Kunststoffe bestimmt wird.

15. Spritzgießverfahren zum Herstellen einer Verbindungsstruktur, insbesondere einer Mehrkomponenten-Verbindungsstruktur nach einem der vorstehenden Ansprüche, **dadurch gekennzeichnet, dass**
in einem einzigen Prozessschritt wenigstens zwei Kunststoffe in einer Spritzgießform verarbeitet werden.
